# EUROPÄISCHE PATENTSCHRIFT

(11) **EP 3 808 595 B1**
(45) Veröffentlichungstag und Bekanntmachung des Hinweises auf die Patenterteilung: **10.05.2023**
(21) Anmeldenummer: 20020479.0
(22) Anmeldetag: 16.10.2020
(51) Int. Cl.: B60N 2/24, B60N 2/68, B29C 44/42, B29C 70/02, B29C 70/06

(54) **SITZ FÜR DEN ÖFFENTLICHEN PERSONEN-NAHVERKEHR**
SEAT FOR PUBLIC PASSENGER TRANSPORT
SIÈGE POUR LES TRANSPORTS PUBLICS

(30) Priorität: 18.10.2019 DE 202019004314 U
(43) Veröffentlichungstag der Anmeldung: 21.04.2021
(73) Patentinhaber: SKA Sitze GmbH, 76744 Wörth am Rhein (DE)
(72) Erfinder: SCHÄFER, Timo, 76744 Wörth am Rhein (DE)
(74) Vertreter: Petersen, Frank

(56) Entgegenhaltungen:
- EP-A1- 0 937 604
- EP-A1- 0 982 180
- FR-A1- 3 037 890
- US-A1- 2014 197 271

## Beschreibung

Die Erfindung betrifft einen Sitz für den öffentlichen Personennahverkehr (ÖPNV), mit einer Rückenschale, wenigstens einer vorderen Sitzfläche und wenigstens zwei Holmen, die die Rückenschale und/oder die wenigstens eine Sitzfläche tragen, wobei die Sitzschalen als Spritzgussteile ausgebildet sind.

Solche Sitze sind z.B. aus der EP 0 982 180 A1 für den ÖPNV bekannt. Grundsätzlich sind ähnliche Sitze aber auch aus anderen Bereichen bekannt. So ist aus der US 2014/0197271 A1 z.B. ein vergleichbarer Sitz zur Verwendung in einem Hubschrauber bekannt, bei dem die Sitzschalen in Laminiertechnik hergestellt sind.

Im öffentlichen Personennahverkehr (ÖPNV) sind für Passagiere sowohl Sitzals auch Stehplätze vorgesehen. Die Sitzplätze sind dabei in bekannter Weise mit Sitzen versehen, die häufig in der Form von Sitzschalen ausgeführt sind. Diese Sitzschalen bestehen häufig aus Kunststoff, zum Beispiel Polyamid.

Zu Komfortzwecken können derartige Sitzschalen auch noch gepolstert werden. Es ist dabei üblich, die Sitzschalen selbst als Rückenschale auszuführen und an dieser Rückenschale Sitzflächen anzubringen, die insbesondere als Polsterträger mit einem Polster und einem Stoffbezug versehen sind.

Um diesen Sitzschalen die aus Sicherheitsgründen vorgeschriebene Stabilität zu verleihen, ist es bekannt, insbesondere die Rückenschale stark zu verrippen. Die dabei angeformten Rippen werden abschließend dann durch die Sitzflächen abgedeckt.

Diese Bauform hat aber den Nachteil, dass ein entsprechendes Werkzeug zur Herstellung der Sitz- bzw. Rückenschale sehr aufwendig ist. Außerdem haben entsprechende Sitzschalen aufgrund der für die Stabilität notwendigen erheblichen Stärken der angespritzten Rippen den Nachteil, dass sie sehr schwer sind. Dies erschwert nicht nur ein Handling während des Einbaus, sondern verringert auch die in einem Fahrzeug für Passagiere zur Verfügung stehende Nutzlast.

Unter diesem Aspekt ist man dazu übergegangen, derartige Sitze mit Holmen zu versehen, die für eine benötigte Stabilität sorgen.

Zunächst wurden derartige Holme als Stahl- oder Aluminiumrohre ausgebildet. Bei einer entsprechenden Stabilität dieser Holme sind diese aber ebenfalls wieder entsprechend schwer. Außerdem ist es bei derartigen Rohren schwierig, sie optisch gefällig in einen entsprechenden Sitz zu integrieren, wobei anfangs die Rückenschalen und gegebenenfalls auch die Sitzflächen auf diese Rohre aufgesetzt wurden.

Unter diesem Aspekt ist man dazu übergegangen, entsprechende Holme insbesondere in der Rückenschale zu umspritzen oder aber bei der EP 0 982 180 A1 mittels Gasinnendrucktechnik als Hohlräume einstückig mit der Rückenlehne herzustellen.

Dies hat aber den Nachteil, dass die Herstellung der Rückenschalen komplizierter wird: Es ist nämlich beim Umspritzen nötig, die entsprechenden Holme in die Spritzgussformen für die Rückenschalen einzulegen. Hierdurch wird nicht nur die Konstruktion für die Spritzgussformen komplizierter, da Halterungen für die Holme vorzusehen sind, die diese während des Spritzgussvorganges fixieren. Auch benötigt das Einlegen der Holme in die Spritzgussformen Zeit und häufig auch ein manuelles Handling, sodass eine preiswerte, vollautomatisierte Fertigung erschwert wird.

Außerdem wird innerhalb der Spritzgussform durch die eingelegten bzw. durch die mittels Gasinnendrucktechnik als Hohlräume ausgebildeten Holme das Strömungs-, Abkühl- und damit Erstarrungsverhalten des für die Rückenschale eingespritzten Kunststoffes beeinflusst, was Qualitätsprobleme mit sich bringen kann. Dies erfordert wiederum einen erhöhten Kontrollaufwand. Die Herstellung wird auch dadurch teurer.

Aufgabe der vorliegenden Erfindung ist daher, einen Sitz wie oben angegeben derart weiterzubilden, dass er leichter herstellbar und damit kostengünstiger wird. Insbesondere soll dabei auch ein Sitz mit möglichst geringem Gewicht realisiert werden.

Diese Aufgabe wird erfindungsgemäß dadurch gelöst, dass die Holme als geschäumte Kunststoffteile separat hergestellt sind, wobei die Holme glasfaserverstärkt sind und einen Glasfaseranteil im Material von 20-40 %, bevorzugterweise von ca. 30 % haben.

Der Vorteil der Erfindung liegt darin, dass bei der Herstellung von Rückenschalen auf das für Probleme anfällige Einlegen von Bauteilen in die Spritzgussformen verzichtet werden kann und die Herstellung des erfindungsgemäßen Sitzes prozesssicherer wird.

Die Herstellung der Holme als geschäumte Kunststoffteile hat auch den Vorteil, dass sehr leichte aber dennoch ausreichend stabile Bauteile herstellbar sind. Außerdem können für die Holme beanspruchungsgerecht ausgelegte Konturen und Querschnitte gewählt werden, womit diese ein minimales Gewicht haben.

Indem die Holme glasfaserverstärkt sind mit einem Glasfaseranteil im Material von 20-40 %, bevorzugterweise von ca. 30 %, ergibt sich ein Optimum zwischen niedrigem Gewicht und Stabilität.

Insbesondere werden die Holme mit einer L-förmigen Kontur ausgestaltet, wodurch die Stabilität des Sitzes optimiert wird.

Dabei kann auch vorgesehen sein, an den unteren Schenkeln der Holme, die im Wesentlichen horizontal verlaufen, Aufnahmen für Sitzbefestigungselemente vorzusehen. Über diese ist eine schnelle und präzise Montage eines erfindungsgemäßen Sitzes an seiner Einsatzstelle möglich.

Die erfindungsgemäß vorgesehenen Holme sind insbesondere zwischen der Rückenschalen und der Sitzfläche angeordnet.

Damit ist zu erreichen, dass der Sitz nach außen ein in sich geschlossenes optisch angenehmes Erscheinungsbild hat. Außerdem ist ein entsprechender Sitz dann auch gut zu reinigen, was für Betreiber des öffentlichen Personennahverkehrs von Vorteil ist.

Weitere Vorteile und Merkmale der Erfindung ergeben sich aus der nachfolgenden Beschreibung eines Ausführungsbeispiels. Dabei zeigt
- Figur 1: die Explosionszeichnung eines erfindungsgemäßen Sitzes.
- Figur 2: eine perspektivische Ansicht einer Rückenschale mit davor angeordneten Holmen.

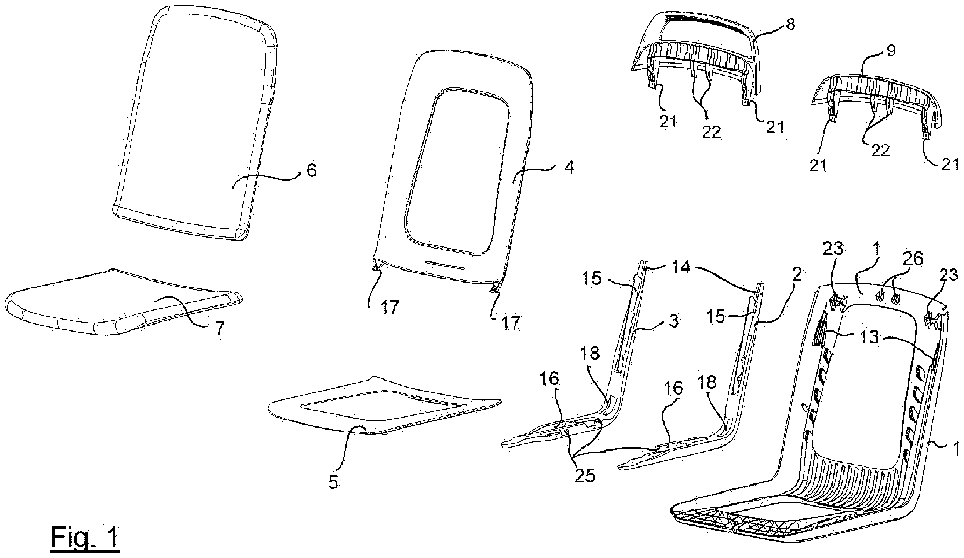

In der Figur 1 erkennt man eine Explosionsdarstellung eines erfindungsgemäßen Nahverkehrssitzes.

Dieser weist eine Rückenschale 1 auf, die aus einem Kunststoff wie beispielsweise Polyamid als Spritzgussteil hergestellt ist.

In diese Rückenschale werden zwei Holme 2, 3 eingesetzt, die L-förmigen ausgebildet sind und für die Stabilität des hier dargestellten Nahverkehrssitzes sorgen. Diese Holme sind separat hergestellt.

Auf die Holme 2, 3, die in die Rückenschale 1 eingesetzt sind, werden Sitzflächen 4, 5 aufgesetzt, die wie die Rückenschale 1 als Spritzgussteil vorzugsweise aus Polyamid hergestellt sind. An den Sitzflächen 4, 5 sind bedarfsweise stoffüberzogene Polsterelemente 6, 7 zu befestigen.

Zwischen die Sitzfläche 4 und die Rückenschale 1 sind am oberen Ende alternativ ein Haltegriff 8 oder ein Kinnschutz 9 montiert.

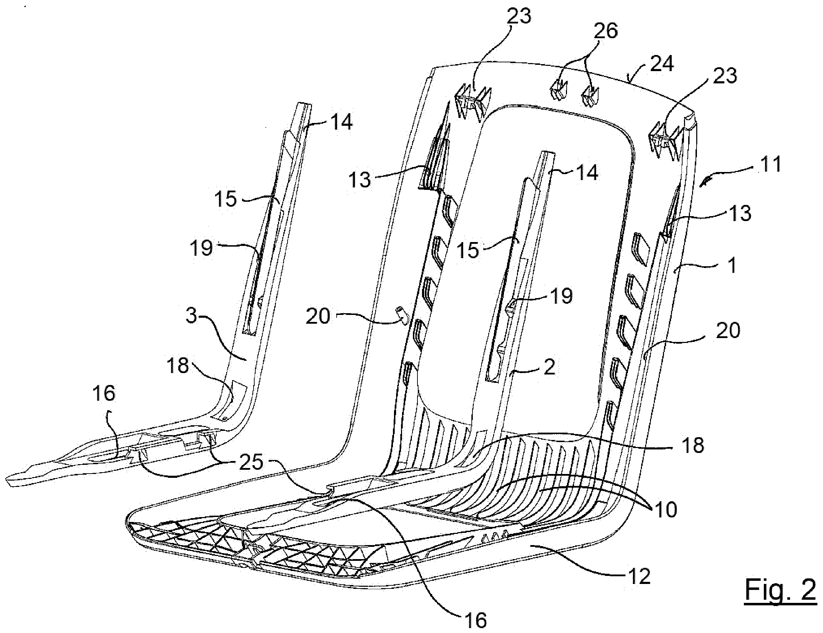

In der Figur 2 ist die Rückenschale 1 und die beiden Holme 2, 3 detaillierter dargestellt. Man erkennt, dass die Rückenschale 1 mit einer Mehrzahl von Rippen 10 versehen ist, die insbesondere an dem Übergang zwischen dem nach oben verlaufenden Rückenabschnitt 11 der Rückenschale und deren nach vorne laufenden, unten angeordneten Montagebereich 12 zu finden sind.

Im oberen Bereich weist der Rückenabschnitt 11 in seinen Seitenbereichen zwei nach unten offene Aufnahmetaschen 13 auf, die einstückig an die Rückenschale angespritzt sind. In diesen Aufnahmetaschen 13 können Einsteckenden 14, die an den oberen Enden der Holme 2, 3 angeformt sind aufgenommen werden. Dadurch wird eine enge Verbindung der Holme 2, 3 mit dem Rückenabschnitt 11 der Rückenschale 1 bewirkt.

Unterhalb der in den Aufnahmetaschen 13 sitzenden Einsteckenden 14 sind die Holme 2, 3 über an ihnen vorhandene Durchgangsbohrungen 19 mit korrespondierenden Schraubdomen 20 mit integrierten Sackbohrungen, die an der Rückenschale 1 angeformt sind, zu verschrauben, wodurch die enge Verbindung der Holme 2, 3 mit der Rückenschale 1 weiter verstärkt wird.

Die Holme 2, 3 sind mittels Thermoplast-Schaumspritzgießen hergestellt. Bei diesem Verfahren wird ein thermoplastischer Kunststoff in einer Kavität aufgeschäumt, indem man der Schmelze in der Spritzgussmaschine ein Treibmittel zusetzt. Dadurch können zum Beispiel die hier dargestellten Holme bei minimalem Gewicht eine optimale Steifigkeit erhalten. Für die hier dargestellten Holme wird dem thermoplastischen Kunststoff dabei außer dem Treibmittel für das Aufschäumen auch noch Glasfaser mit einem Masseanteil von ca. 30 % beigesetzt, wodurch eine besonders hohe Stabilität der fertigen Holme erreicht wird bei einem gleichzeitig sehr niedrigen Gewicht.

Die Holme 2, 3 sind L-förmig ausgebildet und tragen bedarfsweise angebrachte Stege 15 und Aufnahmen 16.

Auf die Stege 15 können sich die Sitzflächen 4, 5 passgenau abstützen, wenn sie durch einen Passagier belastet und durch diese Belastung etwas elastisch verformt werden, wobei im hier dargestellten Beispiel das für den Rücken eines Passagiers vorgesehene Element 4 der Sitzfläche an seinem unteren Ende seitlich zwei Laschen 17 aufweist, die mit zwei Ausnehmungen 18 an den Holmen 2, 3 korrespondieren. Über diese Laschen 17 ist es möglich, dieses zur Stützung eines Rückens vorgesehene Element 4 an den Holmen 2, 3 festzuschrauben, um so eine weiter erhöhte Stabilität und Verwindungsteifigkeit des Sitzes zu erreichen.

Die angesprochenen, in die Holme 2, 3 bei deren Herstellung bereits eingebrachten Aufnahmen 16 werden benutzt, um hier Sitzbefestigungselemente anzubringen, wie insbesondere Maschinenschrauben, mit denen der Sitz an seiner Einsatzstelle befestigt wird.

Benachbart zu diesen Aufnahmen 16 sind des Weiteren noch an den Holmen ebenfalls bereist bei deren Herstellung angebrachte Untergreifabschnitte 25 zu erkennen, die mit entsprechenden nicht dargestellten Befestigungskrallen auf der Unterseite der Sitzflächen 5 korrespondieren und bei dem fertig montierten Sitz für die Fixierung dieser Sitzflächen sorgen.

Je nach Einsatzstelle werden am oberen Ende des Rückenabschnitts 11 der eingangs erwähnte Haltegriff 8 oder alternativ der Kinnschutz 9 montiert. Sowohl der Haltegriff 8 als auch der Kinnschutz 9 weisen dazu nach unten gerichtete Halteelemente 21 und Fixierelemente 22 auf. Die Halteelemente 21 greifen in entsprechende an dem Rückenabschnitt 11 vorgesehene Halterungen 23 ein, während die Fixierelemente 22 die obere Kante 24 des Rückenabschnitts 11 umgreifen und mit ihren unteren Enden in Taschen 26 eingeführt werden, um so eine innige Verbindung mit der Rückenschale 1 zu erzeugen.

Der hier beschriebene Sitz ist somit eine besonders gute Möglichkeit, einen Nahverkehrssitz modular aufzubauen und dabei gleichzeitig eine hohe Stabilität des Sitzes zu erreichen.

### Bezugszeichenliste

- 1: Rückenschale
- 2: Holm
- 3: Holm
- 4: Sitzfläche
- 5: Sitzfläche
- 6: Polsterelement
- 7: Polsterelement
- 8: Haltegriff
- 9: Kinnschutz
- 10: Rippen
- 11: Rückenabschnitt
- 12: Montagebereich
- 13: Aufnahmetaschen
- 14: Einsteckenden
- 15: Stege
- 16: Aufnahmen
- 17: Laschen
- 18: Ausnehmung
- 19: Durchgangsbohrung
- 20: Schraubdom
- 21: Halteelement
- 22: Fixierelement
- 23: Halterung
- 24: Kante
- 25: Untergreifabschnitte
- 26: Taschen

## Patentansprüche

1. Sitz für den öffentlichen Personennahverkehr, mit einer Rückenschale (1), wenigstens einer vorderen Sitzfläche (4, 5) und wenigstens zwei Holmen (2, 3), die die Rückenschale (1) und/oder die wenigstens eine Sitzfläche (4, 5) tragen, wobei die Rückenschale und die Sitzfläche als Spritzgussteile ausgebildet sind,
**dadurch gekennzeichnet,**
**dass** die Holme (2, 3) als geschäumte Kunststoffteile separat hergestellt sind, wobei die Holme (2, 3) einen Glasfaser-Anteil im Material von 20-40 %, vorzugsweise ca. 30 % haben.

2. Sitz gemäß Anspruch 1,
**dadurch gekennzeichnet,**
**dass** die Holme (2, 3) L-förmig ausgestaltet sind.

3. Sitz gemäß Anspruch 1 oder 2,
**dadurch gekennzeichnet,**
**dass** die Holme (2, 3) Aufnahmen (16) für Sitzbefestigungselemente aufweisen.

4. Sitz gemäß einem oder mehreren der vorstehenden Ansprüche,
**dadurch gekennzeichnet,**
**dass** die Holme (2, 3) zwischen Rückenschale (1) und Sitzfläche (4, 5) angeordnet sind.

5. Sitz gemäß einem oder mehreren der vorstehenden Ansprüche,
**dadurch gekennzeichnet,**
**dass** die Holme (2, 3), die Rückenschale (1) und/oder die Sitzflächen (4, 5) miteinander korrespondierende Rastelemente aufweisen.

## Claims

1. Seat for local public transport, having a back shell (1), having at least one front seat surface (4, 5), and having at least two bars (2, 3) which support the back shell (1) and/or the at least one seat surface (4, 5), wherein the back shell and the seat surface are in the form of injection-moulded parts,
**characterized in that**
the bars (2, 3) are produced separately as foamed plastic parts, wherein the bars (2, 3) have a proportion of glass fibre in the material of 20-40 %, preferably approximately 30 %.

2. Seat according to Claim 1,
**characterized in that**
the bars (2, 3) are of L-shaped configuration.

3. Seat according to Claim 1 or 2,
**characterized in that**
the bars (2, 3) have receptacles (16) for seat fastening elements.

4. Seat according to one or more of the preceding claims,
**characterized in that**
the bars (2, 3) are arranged between back shell (1) and seat surface (4, 5).

5. Seat according to one or more of the preceding claims,
**characterized in that**
the bars (2, 3), the back shell (1) and/or the seat surfaces (4, 5) have latching elements which correspond with one another.

## Revendications

1. Siège pour transport public, avec une coque de dossier (1), au moins une surface d'assise avant (4, 5) et au moins deux montants (2, 3) qui supportent la coque de dossier (1) et/ou l'au moins une surface d'assise (4, 5), la coque de dossier et la surface d'assise étant réalisées sous forme de pièces moulées par injection,
**caractérisé en ce que**
les montants (2, 3) sont fabriqués séparément sous forme de pièces en matière plastique expansées, les montants (2, 3) ayant une teneur en fibres de verre dans le matériau de 20 à 40 %, de préférence d'environ 30 %.

2. Siège selon la revendication 1,
**caractérisé en ce que**
les montants (2, 3) sont conçus en forme de L.

3. Siège selon la revendication 1 ou 2,
**caractérisé en ce que**
les montants (2, 3) présentent des logements (16) pour des éléments de fixation de siège.

4. Siège selon une ou plusieurs des revendications précédentes,
**caractérisé en ce que**
les montants (2, 3) sont agencés entre la coque de dossier (1) et la surface d'assise (4, 5).

5. Siège selon une ou plusieurs des revendications précédentes,
**caractérisé en ce que**
les montants (2, 3), la coque de dossier (1) et/ou les surfaces d'assise (4, 5) présentent des éléments d'encliquetage qui se correspondent entre eux.
